# EUROPÄISCHE PATENTSCHRIFT

(11) **EP 0 940 280 B1**
(45) Veröffentlichungstag und Bekanntmachung des Hinweises auf die Patenterteilung: **11.12.2002**
(21) Anmeldenummer: 99102179.1
(22) Anmeldetag: 04.02.1999
(51) Int. Cl.: B60J 7/057, B60J 7/185

(54) **Verfahren zum Steuern eines zu öffnenden Daches mit einer Verschlusseinrichtung**
Control system for an open roof with a locking device
Système de contrôle pour toit ouvrant avec un dispositif de verrouillage

(30) Priorität: 04.03.1998 DE 19809061
(43) Veröffentlichungstag der Anmeldung: 08.09.1999
(73) Patentinhaber: Dr.Ing. h.c.F. Porsche Aktiengesellschaft, 70435 Stuttgart (DE)
(72) Erfinder: Ritter, Bernhard, 75181 Pforzheim (DE); Dahmen, Hans-Dieter, 75242 Neuhausen (DE)

(56) Entgegenhaltungen:
- WO-A-92/15466

## Beschreibung

Die Erfindung betrifft ein Verfahren zum Steuern eines zu öffnenden Daches eines Fahrzeuges nach dem Oberbegriff des Patentanspruches 1, wie es beispielsweise bereits aus der WO 92/15466 bekannt ist.

Die WO 92/15466 beschreibt eine Verschlußeinrichtung, die zum Öffnen des Daches entriegelt wird und nachfolgend in eine Aufbewahrungsposition gebracht wird, um nach der Absenkung die Aufbewahrung des Verdeckes zu erleichtern.

Es sind ferner Verfahren zum Steuern des Öffnens eines Daches bekannt, die zunächst eine Verschlußeinrichtung zur Verbindung des Daches mit einem Windschutzscheibenrahmen lösen und nachfolgend das Dach in seiner geöffneten Endposition ablegen.

Es ist Aufgabe der Erfindung, ein Verfahren zum Steuern eines zu öffnenden Daches zu schaffen, bei dem die Stellung der Verschlußeinrichtung bei einer Bewegung des Daches optimiert ist.

Diese Aufgabe wird erfindungsgemäß mit den Merkmalen des Patentanspruches 1 gelöst. Erfindungsgemäß wird vorgeschlagen, die Verschlußeinrichtung so zu betätigen, daß sie sich sowohl in der geöffneten wie auch in der geschlossenen Position des Daches in ihrem verriegelten Zustand befindet. Hiermit ist sichergestellt, daß sich die Verschlußeinrichtung auch dann in ihrer Verschlußstellung befindet, wenn sich das Dach in seiner geöffneten Position befindet. Hiermit ist in vorteilhafter Weise ausgeschlossen, daß die zur Verbindung mit dem Windschutzscheibenrahmen dienenden Teile der Verschlußeinrichtung, wie z.B. ein Verschlußhaken, in der geöffneten Stellung des Daches in Kontakt mit anderen Gegenständen in ihrer Umgebung geraten und diese erfassen oder verschmutzen. So wird für ein Ablauf zum Öffnen des Daches vorgeschlagen, die Verschlußeinrichtung bereits dann wieder zu verriegeln, wenn das Dach eine vorgegebene (Öffnungs-) Position erreicht hat.

Vorteilhafte Weiterbildungen der Erfindung sind in den Unteransprüchen beschrieben.

Die Erfindung ist nachstehend anhand des in den Figuren dargestellten Ausführungsbeispieles näher erläutert.

Es zeigen:
- Fig. 1: eine Ansicht eines Fahrzeuges mit einem zu öffnenden Dach, wobei sich das Dach in seinem geschlossenen Zustand befindet,
- Fig. 2: ein Fahrzeug nach Fig. 1, wobei sich das Dach in einem halb geöffneten Zustand befindet,
- Fig. 3: ein Fahrzeug nach Fig. 1, wobei sich das Dach in seinem geöffneten Zustand befindet und
- Fig. 4: einen Schnitt durch eine am Dach angeordnete Verschlußeinrichtung.

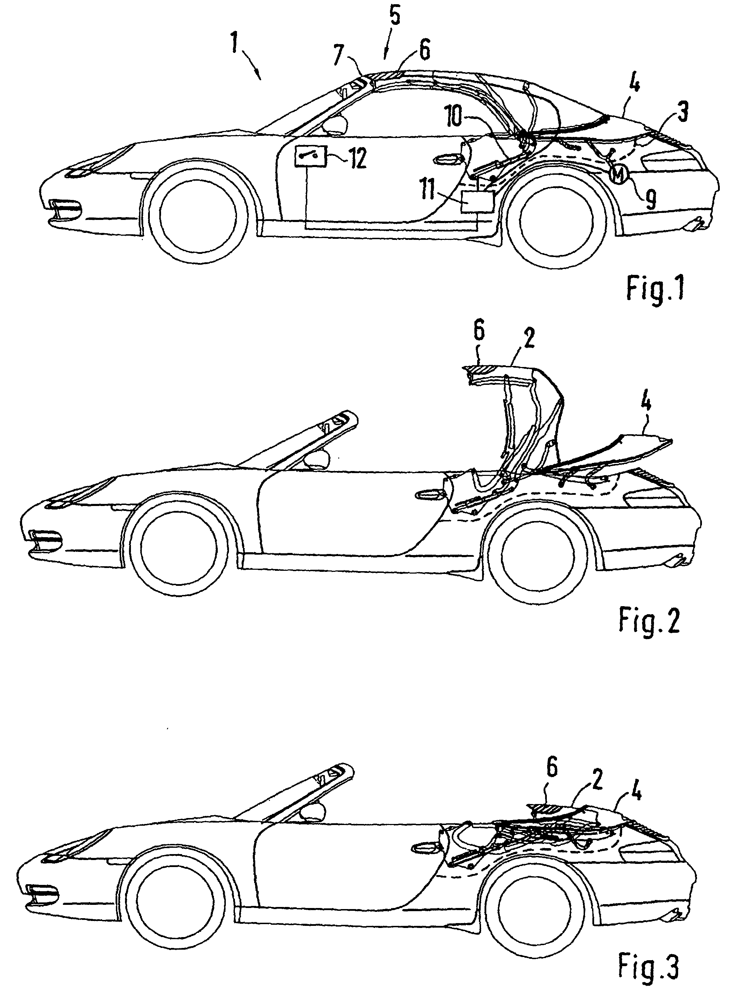

Das in Fig. 1 dargestellte Fahrzeug 1 weist ein Dach 2 auf, welches aus dem in Fig. 1 dargestellten geschlossenen Zustand heraus zu öffnen und in einem Verdeckkasten 3 ablegbar ist. Der Verdeckkasten 3 ist mit einem Deckel 4 verschließbar. Ein vorderes Ende 5 des Daches 2 ist durch eine Verschlußeinrichtung 6 an einem Windschutzscheibenrahmen 7 des Fahrzeuges 1 lösbar befestigt. Ferner sind Antriebseinrichtungen 9 und 10 vorgesehen, wobei die erste Antriebseinrichtung 9 zum Antrieb des Deckels 4 und die zweite Antriebseinrichtung 10 zum Antrieb des Daches 2 dient. Beide Antriebseinrichtungen 9, 10 sind, wie im übrigen auch die Verschlußeinrichtung 6, unabhängig voneinander durch ein Steuergerät 11 ansteuerbar. Das Steuergerät 11 wird durch einen im Innenraum des Fahrzeuges vorgesehenen Schalter 12 aktiviert, mit dem ein nicht gezeigter Fahrer des Fahrzeuges 1 das Öffnen und Schließen des Daches 2 willkürlich auslösen kann.

Neben dem Signal des Schalters 12 erhält das Steuergerät 11 von Sensoren, die an den Antriebseinrichtungen 9 und 10 angeordnet sind, Signale über die Position des Daches 2 und des Deckels 4. Ferner liefert die Verschlußeinrichtung 6 ein Signal über ihren Verschlußzustand und zusätzlich ein Signal, das anzeigt, ob sich das vordere Ende 5 innerhalb eines Abstandes zum Dachrahmen 7 befindet, der es erlaubt, daß die Verschlußeinrichtung 6 das vordere Ende 5 des Daches 2 ergreift.

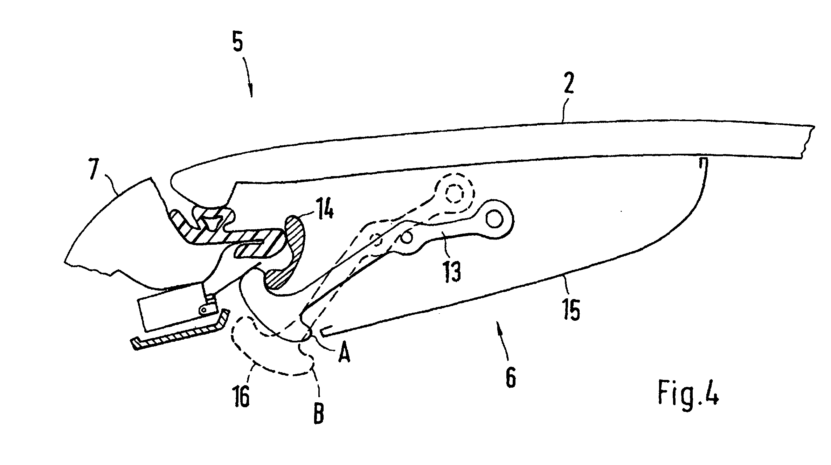

Fig. 4 zeigt in einem Schnitt die Verschlußeinrichtung 6, die sich in der dargestellten Position im Eingriff mit dem Windschutzscheibenrahmen 7 befindet. Dachseitig ist die Verschlußeinrichtung 6 mit einem Verschlußhaken 13 versehen, der mittels einer nicht dargestellten Antriebseinrichtung für den Verschlußhaken 13 von einer durchgezogen dargestellten Verschlußposition A in eine geöffnete Position B (gestrichelt dargestellt) verbringbar ist. Korrespondierend zum Verschlußhaken 13 ist am Dachrahmen 7 eine Hakenaufnahme 14 vorgesehen. Während der Verschlußbewegung des Verschlußhakens 13 aus seiner geöffneten Stellung B in die Verschlußstellung A hintergreift der Verschlußhaken 13 aufgrund seiner Bewegungsbahn die Hakenaufnahme 14. Um den Verschlußhaken 13 auch dann in Eingriff bringen zu können, wenn sich das Vorderende 5 des Daches 2 in vergleichsweise großem Abstand zum Windschutzscheibenrahmen 7 befindet, ist die geöffnete Position B des Verschlußhakens 13 deutlich außerhalb eines Gehäuses 15 gewählt. Der Verschlußhaken 13 steht somit in seiner geöffneten Position B deutlich über das Gehäse 15 hinaus, so daß sich vor allem an einem Kopf 16 des Verschlußhakens 13 umgebende Gegenstände verfangen können und hierdurch beschmutzt oder sogar beschädigt werden.

Die Steuereinrichtung 11 betätigt daher die Verschlußeinrichtung 6 wie folgt: Ausgehend von dem Zustand nach Fig. 1 entriegelt sie die Verschlußeinrichtung 6, d.h. der Verschlußhaken 13 wird von der Position A in die Position B verbracht. Ist die Verschlußeinrichtung 6 vollständig geöffnet, so werden die Antriebseinrichtungen 9 und 10 zum Öffnen des Verdeckes angesteuert. In einer halb geöffneten Position des Daches 2, beispielsweise in der in Fig. 2 dargestellten Position, betätigt die Steuereinrichtung 11 die Verschlußeinrichtung 6 wieder im Sinne eines Schließens, so daß der Verschlußhaken 13 wieder die Position A einnimmt und daher im wesentlichen bündig mit dem Gehäuse 15 abschließt. Auch bei vollständig geöffnetem Dach 2 (vgl. Fig. 3) befindet sich der Verschlußhaken in der Position A.

Ein Schließvorgang des Daches 2 verläuft in umgekehrter Reihenfolge, d.h. von der vollständig geöffneten Position nach Fig. 3 über die halb geschlossene Position nach Fig. 2 zur vollständig geschlossenen Position nach Fig. 1. Der Verschlußhaken 13 befindet sich zu Beginn des Bewegungsvorganges (Fig. 3) in der Position A und bleibt in dieser Position, bis das Dach 2 eine mittlere Position nach Fig. 2 einnimmt. In dieser Stellung des Daches 2 betätigt die Steuereinrichtung 11 die Verschlußeinrichtung 6 im Sinne eines Öffnens des Verschlußhakens 13, der damit in die Position B verbracht wird. Wenn die zweite Antriebseinrichtung 10 ihre Endposition erreicht hat, liegt das vordere Ende 5 des Daches 2 im Bereich des Windschutzscheibenrahmens 7. Die Steuereinrichtung 11 betätigt nun die Verschlußeinrichtung 6 im Sinne eines Schließens und der Verschlußhaken 13 bewegt sich von der Position B in die Position A. Auf dieser Bewegungsbahn hintergreift er die Hakenaufnahme 14 und zieht durch diese Bewegung das vordere ende 5 des Daches 2 gegen den Windschutzscheibenrahmen 7, bis das Dach 2 vollständig geschlossen ist.

## Patentansprüche

1. Verfahren zum Steuern eines zu öffnenden Daches (2) eines Fahrzeuges(1) mit einer Verschlußeinrichtung (6) zur lösbaren Verbindung des Daches mit einem Windschutzscheibenrahmen (7), wobei das Dach fremdkraftbetätigt zu öffnen und zu schließen ist, wobei die Verschlußeinrichtung (6) so betätigt wird, daß sie in geschlossene Position des Daches (2) im verriegelten Zustand ist (Position A), und daß sie zum Öffnen des Daches (2) in einen entriegelten Zustand (Position B) gebracht wird und bei geöffneter Position des Daches (2) eine vorgebbare Position einnimmt, **dadurch gekennzeichnet, daß** die vorgebbare Position der verriegelte Zustand der Verschlußeinrichtung ist und das Verriegeln der Verschlußeinrichtung während des Öffnungsvorgangs des Daches erfolgt, wenn das Dach eine vorgegebene Position erreicht hat.

2. Verfahren nach Anspruch 1, **dadurch gekennzeichnet, daß** beim Schließen des Daches (2) die Verschlußeinrichtung (6) entriegelt wird, wenn das Dach eine weitere vorgegebene Position erreicht hat.

3. Verfahren nach Anspruch 1 oder 2, **dadurch gekennzeichnet, daß** die Verschlußeinrichtung verriegelt wird, wenn das Dach seine geschlossene Position erreicht hat.

## Claims

1. A method of controlling an opening roof (2) of a vehicle (1) with a closure device (6) for releasably connecting the roof to a windscreen frame (7), wherein the roof is to be opened and closed when actuated by external force and wherein the closure device (6) is actuated in such a way that it is in the locked state (position **A**) in the closed position of the roof (2), and it is moved into an unlocked state (position **B**) in order to open the roof (2) and it occupies a pre-settable position in the opened position of the roof (2), **characterized in that** the pre-settable position is the locked state of the closure device and the locking of the closure device during the opening procedure of the roof takes place when the roof has reached a pre-set position.

2. A method according to Claim 1, **characterized in that** as the roof (2) is closed the closure device (6) is unlocked when the roof has reached a further pre-set position.

3. A method according to Claim 1 or 2, **characterized in that** the closure device is locked when the roof has reached its closed position.

## Revendications

1. Procédé de commande d'un toit ouvrable (2) d'un véhicule (1) avec un dispositif de fermeture (6) pour la liaison détachable du toit à un cadre de pare-brise (7), dans lequel le toit est ouvrable et fermable par force extérieure, moyennant quoi le dispositif de fermeture (6) est actionné de telle sorte qu'en position fermée du toit (2), il soit à l'état bloqué (position A) et que, pour ouvrir le toit (2), il soit amené dans un état débloqué (position B), et que, en position ouverte du toit (2), il prenne une position prédéterminée, **caractérisé en ce que** la position prédéterminée est l'état bloqué du dispositif de fermeture et **en ce que** le blocage du dispositif de fermeture pendant l'opération d'ouverture du toit s'effectue lorsque le toit a atteint une position prédéterminée.

2. Procédé selon la revendication 1, **caractérisé en ce que**, lors de la fermeture du toit (2), le dispositif de fermeture (6) est débloqué lorsque le toit a atteint une autre position prédéterminée.

3. Procédé selon la revendication 1 ou 2, **caractérisé en ce que** le dispositif de fermeture est bloqué lorsque le toit a atteint sa position fermée.
